# EUROPÄISCHE PATENTSCHRIFT

(11) **EP 2 121 423 B1**
(45) Veröffentlichungstag und Bekanntmachung des Hinweises auf die Patenterteilung: **27.10.2010**
(21) Anmeldenummer: 07718484.4
(22) Anmeldetag: 05.06.2007
(51) Int. Cl.: B62M 23/02

(54) **BAUSATZ UND VERFAHREN ZUM UMRÜSTEN EINES FAHRRADES SOWIE FAHRRAD**
CONSTRUCTION KIT AND METHOD FOR CONVERTING A BICYCLE, AND BICYCLE
KIT POUR TRANSFORMER UNE BICYCLETTE ET BICYCLETTE AINSI OBTENUE

(30) Priorität: 22.01.2007 AT 1032007
(43) Veröffentlichungstag der Anmeldung: 25.11.2009
(73) Patentinhaber: Kerschgens Long, Johann Joseph, 1232 Wien (AT)
(72) Erfinder: Kerschgens Long, Johann Joseph, 1232 Wien (AT)
(74) Vertreter: Sonn & Partner Patentanwälte
(86) Internationale Anmeldenummer: PCT/AT2007/000273
(87) Internationale Veröffentlichungsnummer: WO 2008/089499

(56) Entgegenhaltungen:
- WO-A-2006/124543
- WO-A1-03/084803
- DE-U1- 29 813 247
- DE-U1-202006 014 533
- GB-A- 190 923 069

## Beschreibung

Die Erfindung betrifft einen Bausatz zum Umrüsten eines unangetriebenen Rades eines Fahrrades in ein mittels einem Antrieb angetriebenes Rad, wobei das Rad eine Radnabe zur drehbaren Aufnahme einer, zwischen den Gabelscheiden einer Gabel befestigbaren Achse aufweist.

Weiters betrifft die Erfindung ein Fahrrad mit zumindest einem unangetriebenen Rad und zumindest einem Antrieb.

Schließlich betrifft die vorliegende Erfindung ein Verfahren zum Umrüsten eines unangetriebenen Rades eines Fahrrades in ein mittels einem Antrieb angetriebenes Rad, wobei das Rad eine Radnabe zur drehbaren Aufnahme einer, zwischen den Gabelscheiden einer Gabel befestigbaren Achse aufweist.

Vorrangig bezieht sich die vorliegende Erfindung auf einen Bausatz zum Umrüsten von Fahrrädern mit einem vorzugsweise elektrischen Antrieb. Dabei ist es prinzipiell unerheblich, ob es sich um ein ein-, zwei-, drei- oder mehrrädriges Fahrrad handelt. Der erfindungsgemäße Bausatz dient dazu, vorzugsweise Pedal-betriebene Fahrzeuge mit einer zusätzlichen Antriebskraft auszurüsten.

Fahrräder mit Hilfsmotoren sind bereits bekannt, wobei gemäß einer Ausführungsvariante eine von einem Benzinmotor angetriebene Walze durch Reibung das Vorderrad in Drehung versetzt. Das ein- und Auskuppeln des Motors während der Fahrt ist dabei relativ kompliziert.

Aus der DE 29813247 ist ein Fahrradbausatz mit den Merkmalen des Oberbegriffs des Anspruchs 1 bekannt.

Die DE 10 127 769 A1 beschreibt ein Fahrrad mit einem elektrischen Hilfsantrieb, bei dem ein Elektromotor über ein Planetenradgetriebe mit der Radnabe des Hinterrades kuppelbar ist. Die Konstruktion erfordert eine relativ komplex aufgebaute Radnabe des Hinterrades und ist somit zur Nachrüstung vorhandener Fahrräder ungeeignet.

Auch die DE 94 16 058 U1 beschreibt ein elektrisches Fahrrad bei dem ein Elektromotor über ein spezielles Getriebe mit der Radnabe des Hinterrades verbunden ist. Auch diese Konstruktion ist relativ kompliziert aufgebaut und ist auf Grund der Wirkung auf das Hinterrad relativ schwierig nachträglich bei einem bestehenden Fahrrad einzubauen.

Zudem sind herkömmliche Hilfsantriebe für Fahrräder meist relativ groß und schwer, was ein Manövrieren des Fahrzeuges ohne motorischen Antrieb wesentlich erschwert.

Aufgabe der vorliegenden Erfindung ist die Schaffung eines oben genannten Umrüst-Bausatzes, mit dessen Hilfe ein unangetriebenes Rad eines Fahrrades rasch und einfach mit einem Antrieb ausgerüstet werden kann. Der Bausatz soll aus möglichst wenigen und einfach aufgebauten Teilen bestehen und möglichst kostengünstig sein und ein möglichst geringes Gewicht aufweisen.

Weiters besteht die Aufgabe in der Schaffung eines Fahrrades, welches mit möglichst wenig Aufwand mit einem Antrieb versehen werden kann. Ebenso soll das Fahrrad wieder möglichst einfach rückgebaut werden können.

Schließlich besteht eine weitere Aufgabe der Erfindung in der Schaffung eines Verfahrens zum Umrüsten eines unangetriebenen Rades eines Fahrrades in ein mittels einem Antrieb angetriebenes Rad, welches möglichst einfach und rasch durchführbar ist.

Die erste Aufgabe wird durch einen oben genannten Bausatz gelöst, bei dem zwei jeweils an der Außenseite einer Gabelscheide anordenbare Halterungen mit Elementen zur Verbindung mit jeweils einer Gabelscheide vorgesehen sind, und die Halterungen jeweils ein Lager zur drehbaren Lagerung zumindest einer Welle aufweisen, wobei die zumindest eine Welle drehfest mit dem anzutreibenden Rad verbindbar ist, und bei dem weiters eine Einrichtung zur Verbindung zumindest einer Welle mit dem Antrieb vorgesehen ist. Der gegenständliche Bausatz beinhaltet wenige, einfach aufgebaute Teile, die ein Nachrüsten eines unangetriebenen Rades eines Fahrrades mit einem Antrieb rasch und kostengünstig möglich macht. Der Bausatz besteht aus zumindest einer Welle, welche drehfest mit dem anzutreibenden Rad verbunden wird und zwei Lagern in zwei beiderseits der Gabel angeordneten Halterungen zur Aufnahme der zumindest einen Welle. Mit der drehbar in den Lagern angeordneten zumindest einen Welle wird schließlich der Antrieb entsprechend verbunden. Als Antrieb können Elektromotoren aber auch Verbrennungsmotoren zur Anwendung kommen. Der gegenständliche Umrüst-Bausatz ist besonders billig herstellbar und weist zudem ein sehr niedriges Gewicht auf. Die entsprechenden Antriebe können je nach Anforderung, hinsichtlich Leistung und Größe, ausgewählt werden.

Vorteilhafterweise ist jede Halterung aus einer mit einer Gabelscheide verbindbaren Gabelhalterung und einer damit lösbar verbundenen Wellenhalterung gebildet. Die Zweiteilung der Halterung erleichtert die Montage, insbesondere die Anordnung der zumindest einen Welle im Lager, welches in der Wellenhalterung platziert ist.

Die Verbindung der Gabelhalterung mit der Wellenhalterung erfolgt vorzugsweise über Schrauben. Es sind jedoch auch andere Verbindungsmethoden, insbesondere schnell und werkzeuglos betätigbare Verbindungselemente denkbar.

Auch die Elemente zur Verbindung der Halterung bzw. der Gabelhalterung mit der Gabelscheide können durch zumindest eine Schraubverbindung gebildet sein. Beispielsweise kann an der Halterung bzw. Gabelhalterung eine Bohrung angeordnet sein, durch welche eine entsprechende Schraube platziert werden kann, welche durch die Öffnung an der Gabel des Fahrrades, welche normalerweise zur Aufnahme der Achse des Rades vorgesehen ist, angeordnet werden kann.

Weiters kann ein Element zur Verbindung der Halterung bzw. Gabelhalterung mit der Gabelscheide durch eine U-förmige Gabelschelle mit Gewinden an den Enden zur lösbaren Verbindung mit Muttern gebildet sein. An der Halterung bzw. Gabelhalterung kann ein Langloch angeordnet sein, über welches die, die Gabelscheide umfassende Gabelschelle mit den Muttern befestigbar ist. Über eine derartige Befestigungsmethode kann die Halterung nachträglich verschoben werden und so die neue Drehachse des Rades in geringfügigem Ausmaß verstellt werden. Dies kann zur Anpassung an die Lage vorhandener Bremsen oder eines Kotflügels notwendig sein.

Die Lager zur drehbaren Lagerung der zumindest einen Welle sind vorzugsweise durch Kugellager gebildet, welche in der Halterung bzw. der Wellenhalterung entsprechend befestigt sind.

Gemäß einem weiteren Merkmal der Erfindung ist an einer Halterung ein Element zur lösbaren Befestigung des Antriebs angeordnet. Über das Befestigungselement wird der Antrieb fixiert und vor ungewollter Entfernung geschützt.

Bei Verwendung eines elektrischen Antriebs kann an einer Halterung ein Element zur lösbaren Befestigung einer Batterie angeordnet sein. Vorteilhafterweise wird der Antrieb auf einer Seite des anzutreibenden Rades und die Batterie auf der gegenüberliegenden Seite angeordnet.

Um eine möglichst einfache Befestigung und Demontage des Antriebs oder der Batterie zu ermöglichen, kann das Befestigungselement durch eine Flügelschraube oder dergl. gebildet sein. Dadurch wird auch eine rasche Demontage des Antriebs und der Batterie ohne Werkzeug ermöglicht. Auf diese Weise kann während des Parkens des Fahrzeuges in öffentlichen Bereichen der Antrieb und allenfalls die Batterie entfernt und mitgeführt werden. Dadurch kann auch ein Diebstahl diese Komponenten unterbunden werden.

Gemäß einer Ausführungsform der Erfindung ist eine vom Lager einer Halterung zum Lager der zweiten Halterung durchgehende Welle vorgesehen. In diesem Fall nimmt die Welle den Platz der ursprünglich in der Radnabe des unangetriebenen Rades angeordneten Achse ein.

Die drehfeste Verbindung zwischen Welle und Rad kann dadurch gebildet werden, dass die Welle im mittleren Bereich einen mehreckigen, insbesondere quadratischen, Querschnitt aufweist, wobei der Außendurchmesser der Welle im mittleren Bereich geringfügig größer ist als der Innendurchmesser der Radnabe des anzutreibenden Rades und wobei die drehfeste Verbindung zwischen Welle und Rad durch eine Presspassung der Welle in der Radnabe gebildet ist. In diesem Fall wird die Achse und werden allenfalls die Kugellager aus der Radnabe des Rades entfernt und die Welle mit dem mehreckigen, insbesondere quadratischen Querschnitt in die Radnabe eingeschlagen, womit diese drehfest mit der Radnabe und somit mit dem Rad verbunden ist. Dies stellt eine einfache und effiziente Möglichkeit der Umrüstung eines unangetriebenen Rades eines Fahrrades in ein angetriebenes Rad dar.

Die drehfeste Verbindung zwischen Welle und Rad kann dadurch verbessert werden, dass zwei Fixierscheiben mit einer Aufnahme für die Welle entsprechend dem mehreckigen, insbesondere quadratischen Querschnitt vorgesehen sind, wobei die Fixierscheiben an der, der Radnabe zugewandten Seite, eine Bezahnung oder dergl. zur drehfesten Verbindung mit der Radnabe aufweisen. Die Bezahnung dringt dabei in einem Teil der Stirnseite der Radnabe ein und verhindert dadurch eine Drehbewegung der Fixierscheibe im Bezug auf die Radnabe.

Gemäß einer alternativen Ausführungsform können zwei Wellen und zwei mit den Wellen verbindbaren Fixierscheiben vorgesehen sein, wobei die Fixierscheiben an der dem Rad zugewandten Seite Elemente zur drehfesten Verbindung mit dem Rad aufweisen. Bei dieser Ausführungsform wird die Drehbewegung eines Antriebs über eine Welle und die Fixierscheibe sowie die Elemente zur drehfesten Verbindung auf das Rad übertragen.

Diese Elemente zur drehfesten Verbindung der Wellen mit dem Rad können beispielsweise durch mehrere zwischen allfällige Speichen des Rades anordenbare Elemente, insbesondere Stäbe, gebildet sein.

Die Einrichtung zur Verbindung zumindest einer Welle mit dem Antrieb kann durch einen Antriebsflansch gebildet sein. Der Antriebsflansch stellt die Verbindung zwischen Welle und Antrieb her und kann, abhängig von der Art des Antriebs und der Welle, unterschiedlich ausgebildet sein. Ein Getriebe zwischen Welle und Antrieb ist in der Regel nicht erforderlich, was die Kosten und das Gewicht des gegenständlichen Umrüst-Bausatzes wesentlich reduziert.

Gelöst wird die zweite erfindungsgemäße Aufgabe durch ein Fahrrad, bei dem das zumindest eine unangetriebene Rad mit Hilfe des oben genannten Bausatzes mit dem Antrieb verbunden ist.

Vorzugsweise ist das vordere Rad des Fahrrades mit dem Antrieb verbunden. Auf diese Weise kann ein Zusatzantrieb für ein Fahrrad in besonders einfacher Weise geschaffen werden.

Der Antrieb ist vorzugsweise durch einen Elektromotor gebildet. Die Drehzahl des Elektromotors lässt sich in diesem Fall relativ einfach durch Änderung der Versorgungsspannung für den Elektromotor ändern.

Es ist auch möglich einen Antrieb durch einen Verbrennungsmotor mit einer entsprechenden Treibstoffzufuhr zu bilden.

Gelöst wird die dritte erfindungsgemäße Aufgabe durch ein oben genanntes Verfahren, bei dem das unangetriebene Rad aus der Gabel ausgebaut wird, zwei Halterungen mit jeweils einem Lager an jeweils einer Gabelscheide der Gabel befestigt werden, eine drehfeste Verbindung zwischen zumindest einer Welle und dem Rad hergestellt wird, die mit dem Rad verbundene zumindest eine Welle zwischen den Lagern der Halterungen angeordnet wird, und schließlich zumindest eine Welle mit dem Antrieb verbunden wird. Dieses Verfahren zum Umbauen eines unangetriebenen Rades eines Fahrrades ist besonders einfach und rasch durchführbar. Ebenso rasch und einfach kann das Rad durch Umkehr der Verfahrensschritte wieder rückgebaut werden.

Gemäß einer Variante der Erfindung wird die Achse aus der Radnabe des unangetriebenen Rades entfernt, und eine Welle mit einem geringfügig größeren Außendurchmesser als der Innendurchmesser der Radnabe zur Herstellung einer drehfesten Verbindung zwischen Welle und Rad in die Radnabe gepresst.

Alternativ dazu kann die Achse auch aus der Radnabe des unangetriebenen Rades entfernt werden, und können zwei mit zumindest einer Welle verbundene Fixierscheiben drehfest mit der Radnabe des Rades verbunden werden.

Die vorliegende Erfindung wird anhand der beigefügten Zeichnungen näher erläutert.

Darin zeigen:
- Fig. 1: eine schematische Vorderansicht auf das Vorderrad eines Fahrrades;
- Fig. 2: eine Ausführungsform des erfindungsgemäßen Umrüst-Bausat- zes in zerlegtem Zustand;
- Fig. 3 bis 6: verschiedene Ansichten auf das Vorderrad eines Fahr- rades während des Umrüstens;
- Fig. 7 und Fig. 8: zwei verschiedene Ausführungsformen der dreh- festen Verbindung zwischen zumindest einer Welle und der Radnabe des anzutreibenden Rades; und
- Fig. 9 bis 14: verschiedene Ausführungsformen eines mit einem An- trieb versehenen Fahrrades, jeweils in Vorder- und Seiten- ansicht.

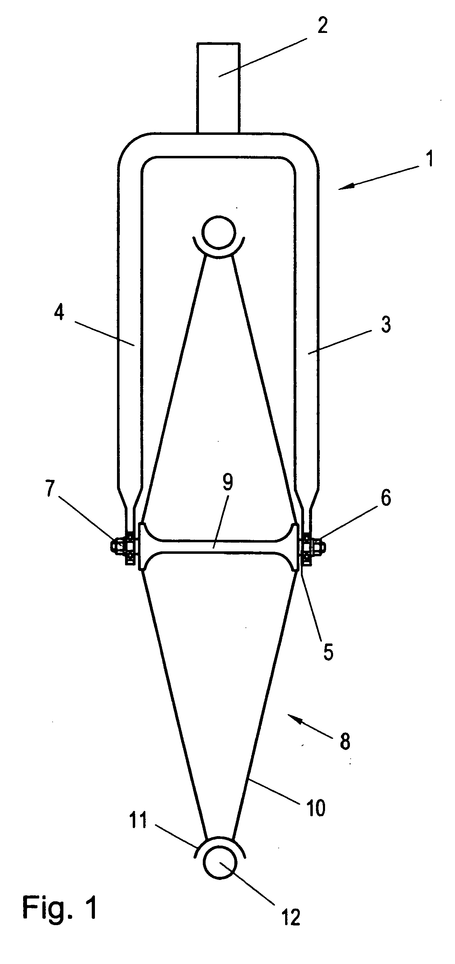

Fig. 1 zeigt eine schematische Vorderansicht auf das Vorderrad eines Fahrrades. Die Fahrradgabel 1 des Fahrrades besteht aus dem Gabelkopf 2 und zwei Gabelscheiden 3, 4 an deren Ende die Achse 5 des Rades 8, üblicherweise des Vorderrades, mit Hilfe von Achsmuttern 6, 7 befestigt ist. Die Achse 5 ist über entsprechende Kugellager (nicht dargestellt) drehbar in der Radnabe 9 gelagert. An der Radnabe 9 ist über Speichen 10 die Felge 11 und schließlich der Reifen 12 montiert. Dieses unangetriebene Rad 8, üblicherweise das Vorderrad eines Fahrrades, lässt sich besonders einfach und rasch ausbauen, so dass es sich besonders für einen Umbau in ein mittels einem Antrieb A angetriebenes Rad 8 eignet.

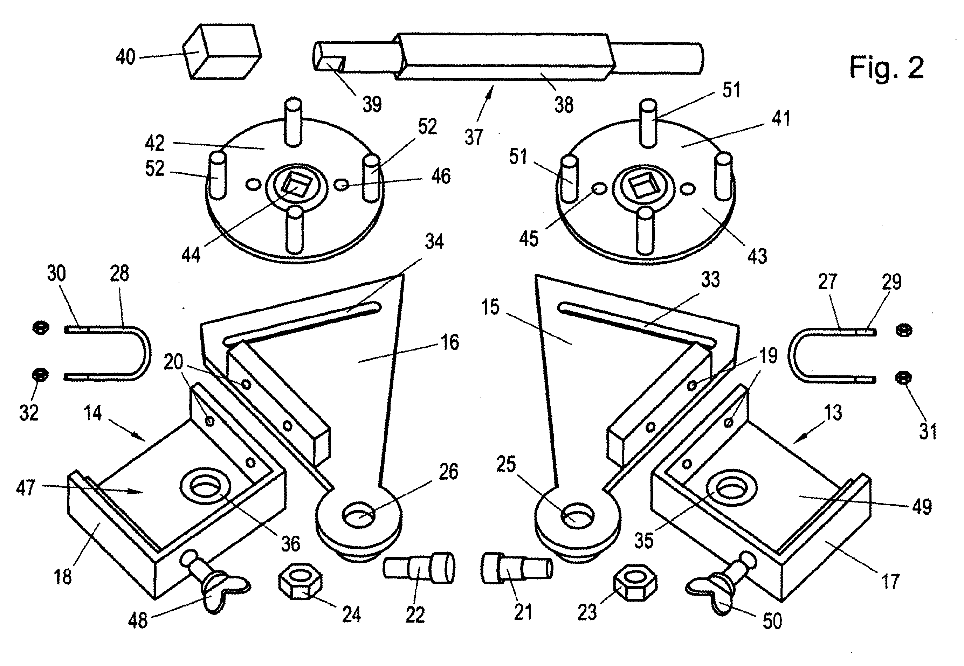

Fig. 2 zeigt eine Ausführungsform des erfindungsgemäßen Umrüst-Bausatzes in seine Einzelteile aufgeteilt. Der Umrüstbausatz besteht aus zwei Halterungen 13, 14, welche im dargestellten Ausführungsbeispiel jeweils aus einer Gabelhalterung 15, 16 und einer damit lösbar verbindbaren Wellenhalterung 17, 18 besteht. Die Verbindung der Gabelhalterungen 15, 16 mit den Wellenhalterungen 17, 18 erfolgt vorzugsweise über Schrauben (nicht dargestellt), welche durch die Bohrungen 19, 20 gedreht werden.

Die Verbindung der Gabelhalterungen 15, 16 mit den Gabelscheiden 3, 4 der Gabel 1 des Fahrrades erfolgt mit entsprechenden Verbindungselementen. Im dargestellten Ausführungsbeispiel werden die Gabelhalterungen 15, 16 über Schrauben 21, 22 und zugehörigen Muttern 23, 24 an den Gabelscheiden 3, 4 befestigt. Zu diesem Zweck werden die Schrauben 21, 22 durch entsprechende Öffnungen 25, 26 in den Gabelhalterungen 15, 16 gesteckt und in die Nut am Ende der Gabelscheiden 3, 4 eingesetzt, die üblicherweise für die Achse 5 des Rades 8 vorgesehen ist. Eine entsprechende Fixierung erfolgt mit Hilfe der Muttern 23, 24. Zusätzlich können weitere Verbindungselemente vorgesehen sein, welche beispielsweise durch U-förmige Gabelschellen 27, 28 gebildet sein können. Die Gabelschellen 27, 28 weisen an den Enden der Schenkel-Gewinde 29, 30 zur lösbaren Verbindung mit entsprechenden Muttern 31, 32 auf. Die Gabelschellen 27, 28 umfassen die Gabelscheide 3, 4 und werden durch ein entsprechend angeordnetes Langloch 33, 34 in der Gabelhalterung 15, 16 platziert und mit Hilfe der Muttern 31, 32 fixiert. Das Langloch 33, 34 in der Gabelhalterung 15, 16 erlaubt eine Verschwenkung der Gabelhalterung um die Schrauben 21, 22 in den Bohrungen 25, 26 und somit eine Justierung der Gabelhalterung 15, 16 in Bezug auf die Fahrradgabel 1.

An den Halterungen 13, 14 ist jeweils ein Lager 35, 36 zur drehbaren Lagerung zumindest einer Welle 37 angeordnet. Bei der dargestellten zweiteiligen Ausführungsform der Halterungen 13, 14 ist das Lager 35, 36 jeweils auf der Wellenhalterung 17, 18 angeordnet. Die Lager 35, 36 sind vorzugsweise durch Kugellager, wie sie bei Fahrrädern üblicherweise eingesetzt werden, gebildet.

Im dargestellten Beispiel ist nur eine Welle 37 vorgesehen, welche im zusammengebauten Zustand vom Lager 35 einer Halterung 13 bzw. Wellenhalterung 17 zum Lager 36 der zweiten Halterung 14 bzw. Wellenhalterung 18 verläuft. Die Welle 37 weist im mittleren Bereich 38 einen mehreckigen, insbesondere quadratischen Querschnitt auf, der zur Übertragung der Drehbewegung auf das Rad 8 des Fahrrades dient. An einem Ende der Welle 37 kann eine Einkerbung 39 oder dergl. vorgesehen sein, über die ein entsprechender Antriebsflansch 40 die Verbindung mit einem Antrieb A (nicht dargestellt) herstellt. Weiters sind zwei Fixierscheiben 41, 42 vorgesehen mit jeweils einer Aufnahme 43, 44 für die Welle 37 entsprechend dem mehreckigen, insbesondere quadratischen Querschnitt im mittleren Bereich 38. Die Fixierscheiben 41, 42 haben an der, der Radnabe 9 des anzutreibenden Rades 8, zugewandten Seite eine Bezahnung 45, 46 oder dgl., welche zur Herstellung einer drehfesten Verbindung mit der Radnabe 9 dient. An den Fixierscheiben 41, 42 können Elemente, insbesondere Stäbe 51, 52 angeordnet sein, welche im zusammengebauten Zustand zwischen die Speichen 10 des Rades 8 ragen.

Der erfindungsgemäße Umrüst-Bausatz enthält sehr wenige Bauteile, welche besonders rasch und einfach montiert werden können. Die Teile sind vorzugsweise aus Metall, insbesondere Leichtmetall, gefertigt und weisen daher eine hohe Stabilität bei gleichzeitig relativ niedrigem Gewicht auf. Der Umrüst-Bausatz kann mit verschiedenen Antrieben A (nicht dargestellt) versehen werden. Zur Fixierung eines Antriebes A ist an einer Halterung 14 bzw. Wellenhalterung 18 eine entsprechende Aufnahme 47 und ein Befestigungselement 48, beispielsweise in Form einer Flügelschraube oder dergl., vorgesehen. Der Antrieb A wird also in die Aufnahme 47 eingeschoben und mit Hilfe des Befestigungselements 48 fixiert. Dies ermöglicht einen raschen Ausbau des Antriebs A, so dass dieser, beispielsweise beim Parken des Fahrrades, entnommen und vor Beschädigung und Diebstahl geschützt werden kann. Im Falle eines elektrischen Antriebs A kann die dafür notwendige Batterie B (nicht dargestellt) an der anderen Halterung 13 bzw. Wellenhalterung 17 über eine entsprechende Aufnahme 49 und ein entsprechendes Befestigungselement 50 befestigt werden.

Der Umrüst-Bausatz kann mit verschieden großen und leistungsfähigen Antrieben A je nach Anwendung ausgestattet werden.

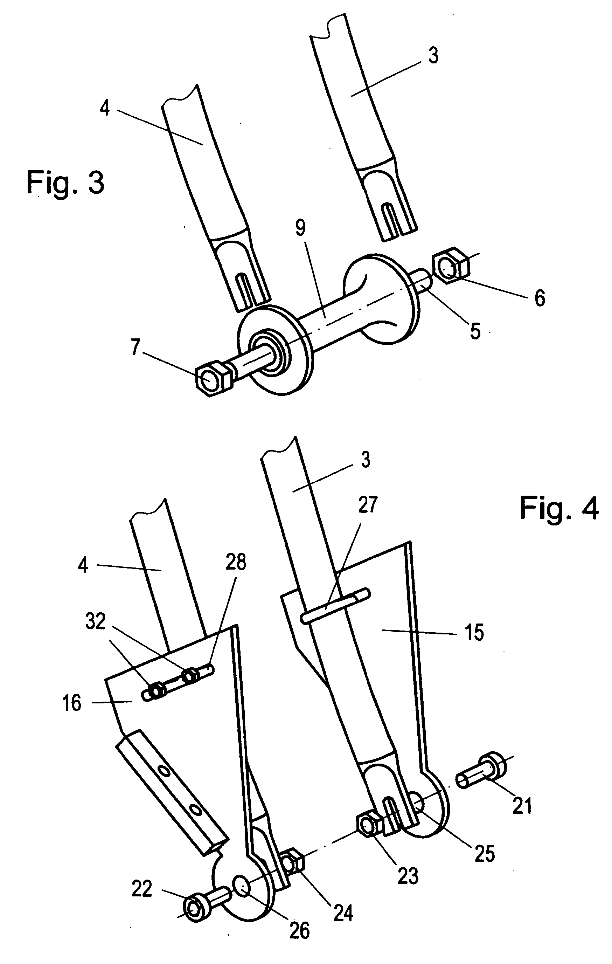

Die nachfolgenden Figuren 3 bis 6 zeigen verschiedene Stufen während des Umrüstens eines unangetriebenen Rades 8 eines Fahrrades in ein mittels einem Antrieb A angetriebenes Rad 8. Gemäß Fig. 3 wird das Rad 8 durch lösende Achsmuttern 6, 7 entfernt. Der besseren Übersicht halber ist lediglich die an der Achse 5 drehbar gelagerte Radnabe 9 ohne den zugehörigen Speichen 10 der Felge 11 und des Reifens 12 dargestellt. Danach wird die Achse 5 aus der Radnabe 9 zusammen mit den darin befindlichen Kugellagern (nicht dargestellt) entfernt.

Entsprechend Fig. 4 werden die beiden Gabelhalterungen 15, 16 an der Gabelscheide 3, 4 mit Hilfe der Schrauben 21, 22 und den Muttern 23, 24 befestigt. Zusätzlich können die Gabelschellen 27, 28 zur Befestigung dienen.

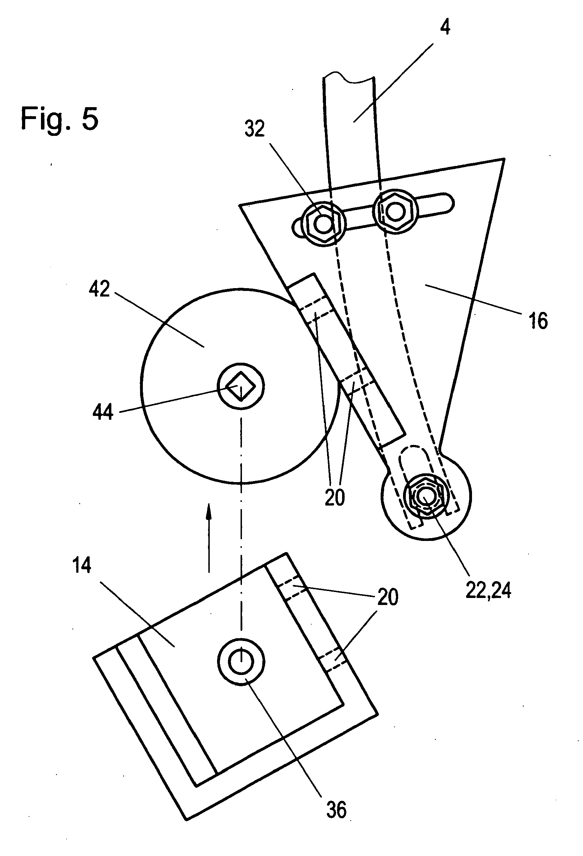

Wie der Fig. 5 schematisch entnommen werden kann, werden danach die Wellenhalterungen 13 und 14 mit den darin befindlichen Lagern 35, 36 mit Hilfe entsprechender Schrauben, welche durch die Öffnungen 20 der Wellenhalterung 14 und der Gabelhalterung 16 geschraubt werden, befestigt. Die Welle 37 wird in die Radnabe 9 eingeschlagen, so dass diese drehfest mit der Radnabe 9 verbunden ist. Um die Enden der Welle 37 werden die Fixierscheiben 41, 42 angeordnet und danach die Enden der Welle 37 durch die Lager 35, 36 der Wellenhalterungen 13, 14 angeordnet.

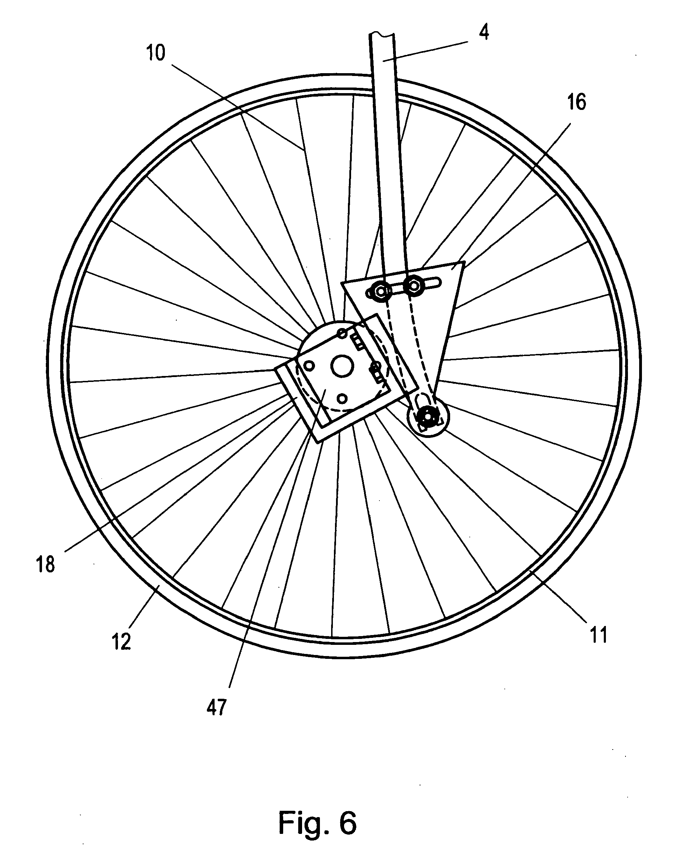

Fig. 6 zeigt das fertig umgebaute Fahrrad von der Seite, wobei die Aufnahme 47 an der rechten Wellenhalterung 18 zur Aufnahme des Antriebs A (nicht dargestellt) dient.

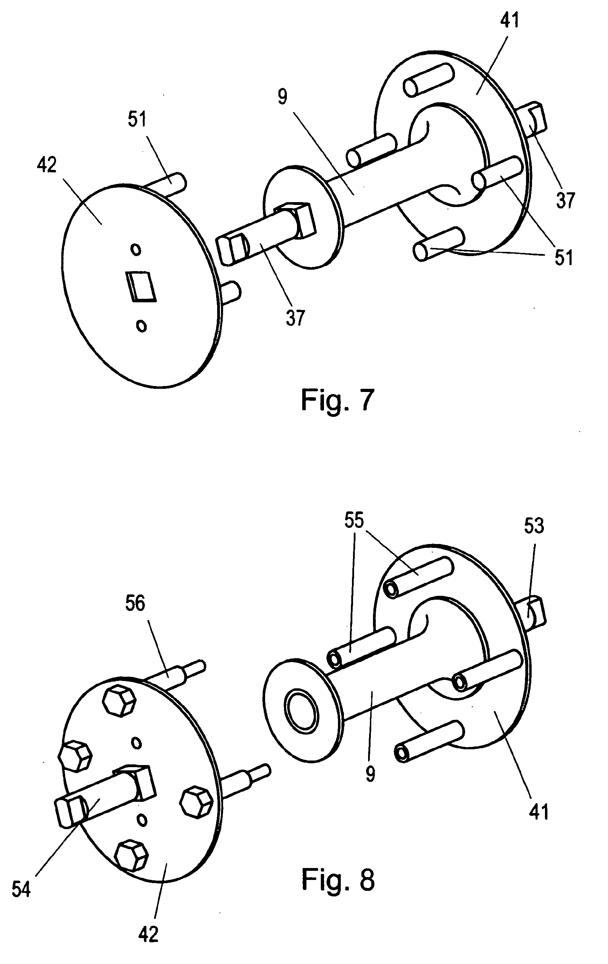

Die Fig. 7 und 8 zeigen zwei verschiedene Ausführungsformen von der Durchführung der drehfesten Verbindung zwischen der Radnabe 9 und der zumindest einen Welle 37. Gemäß Fig. 7 ist eine durchgehende Welle 37 vorgesehen, welche durch die Radnabe 9 geführt wird. Außen werden die Fixierscheiben 41, 42 an der Welle 37 platziert. Auf diese Weise wird eine drehfeste Verbindung zwischen der Welle 37 und der Radnabe 9 und somit dem gesamten Rad 8 (nicht dargestellt) hergestellt.

Bei der Variante gemäß Fig. 8 sind zwei Wellenteile 53, 54 vorgesehen, die mit zwei Fixierscheiben 41, 42 verbunden sind oder mit diesen einstückig hergestellt sind. Die Fixierscheiben 41, 42 weisen entsprechende Hülsen 55 und Schrauben 56 auf, die durch die Speichen 10 des Rades 8 gesteckt und dann verbunden werden. Auf diese Art und Weise kann ebenfalls eine drehfeste Verbindung zwischen den Wellen 53, 54 und dem Rad 8 hergestellt werden. Wird nun ein Antrieb A mit der zumindest einen Welle 37, 53 oder 54 verbunden kann die Drehbewegung vom Antrieb A auf die Welle 27, 53, 54 und in der Folge auf die Radnabe 9 und das Rad 8 übertragen werden.

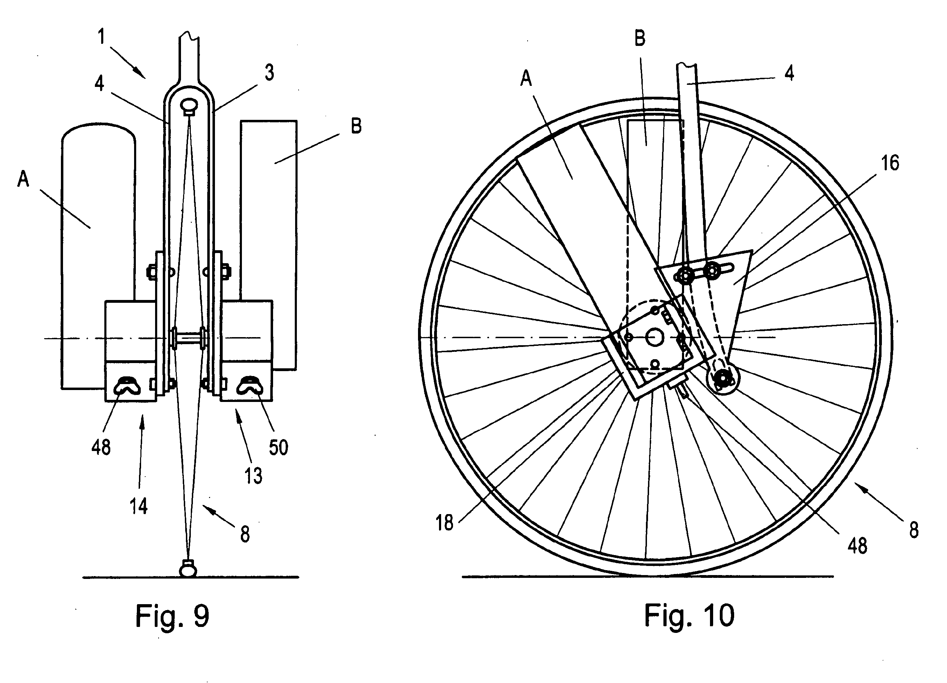

Die Fig. 9 bis 14 zeigen verschiedene Arten von Antrieben bei einem Fahrrad mit einem Umrüst-Bausatz der gegenständlichen Art, jeweils in der Ansicht von vorne und in der Seitenansicht.

Gemäß Fig. 9 und Fig. 10 ist der Antrieb durch einen Elektromotor A gebildet, der lösbar an der Halterung 14 befestigt ist. Auf der linken Seite des Rades 8 ist die Batterie B an der Halterung 13 zur Versorgung des elektrischen Antriebs A angeordnet. Die entsprechenden Verbindungskabeln sind nicht dargestellt. Über die Befestigungselemente 48 und 50 können der Antrieb A und die Batterie B fixiert werden.

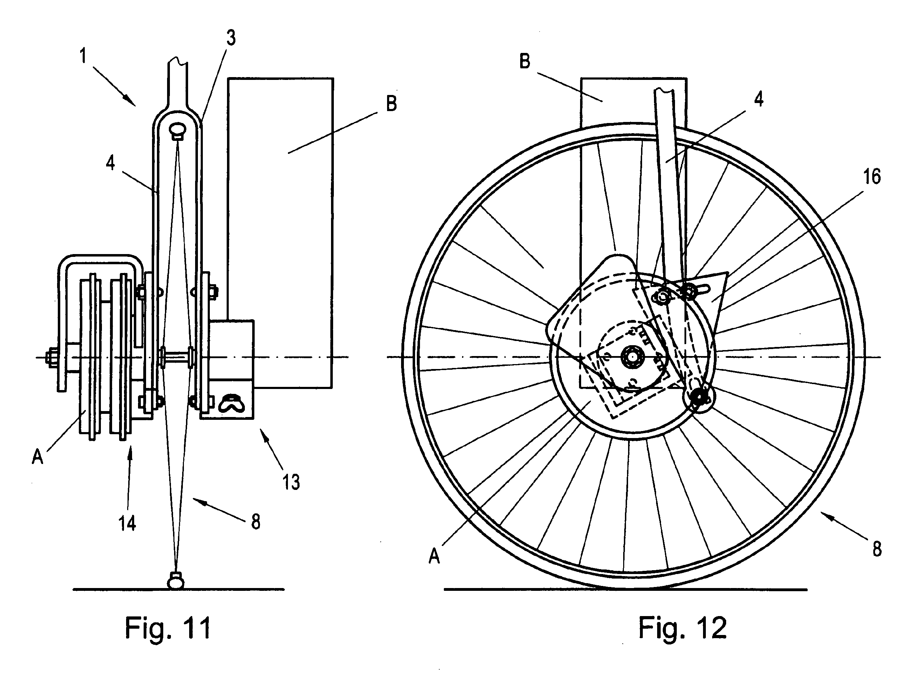

Die Fig. 11 und 12 zeigen eine Variante gemäß der ein anderer elektrischer Antrieb A und eine etwas leistungsstärkere Batterie B angeordnet sind.

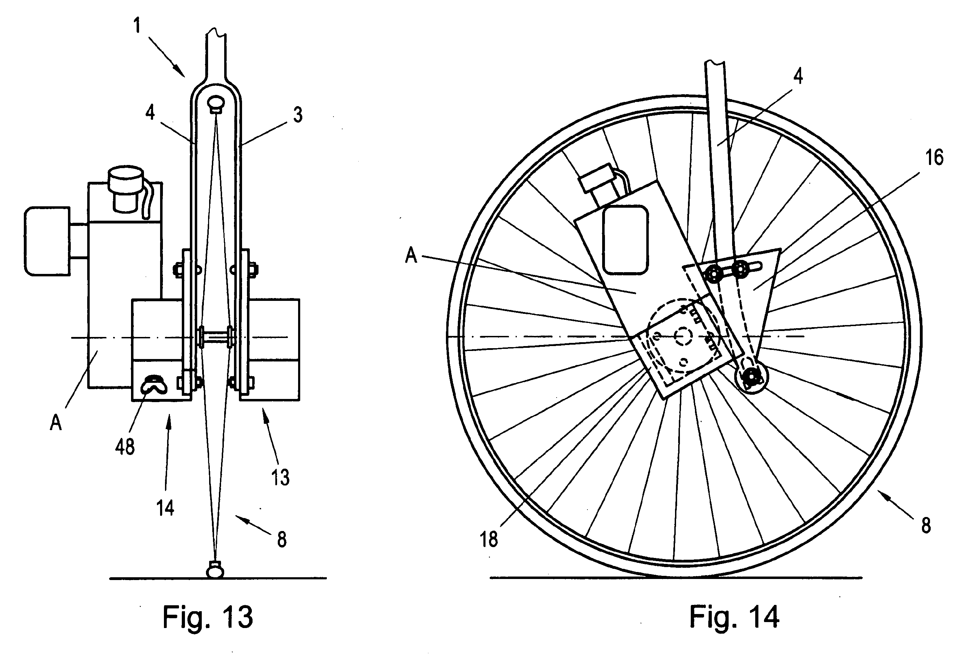

Schließlich zeigen die Fig. 13 und 14 eine Ausführungsvariante eines Antriebs A in Form eines Verbrennungsmotors. Der Tank für den Treibstoff kann entweder direkt am Verbrennungsmotor oder an der gegenüberliegenden Seite angeordnet werden.

## Patentansprüche

1. Bausatz zum Umrüsten eines unangetriebenen Rades (8) eines Fahrrades in ein mittels einem Antrieb (A) angetriebenes Rad (8), wobei das Rad (8) eine Radnabe (9) zur drehbaren Aufnahme einer, zwischen den Gabelscheiden (3, 4) einer Gabel (1) befestigbaren Achse (5) aufweist, **dadurch gekennzeichnet, dass** zwei jeweils an der Außenseite einer Gabelscheide (3, 4) anordenbare Halterungen (13, 14) mit Elementen zur Verbindung mit jeweils einer Gabelscheide (3, 4) vorgesehen sind, und die Halterungen (13, 14) jeweils ein Lager (35, 36) zur drehbaren Lagerung zumindest einer Welle (37, 53, 54) aufweisen, wobei die zumindest eine Welle (37, 53, 54) drehfest mit dem anzutreibenden Rad (8) verbindbar ist, und dass weiters eine Einrichtung zur Verbindung zumindest einer Welle (37, 53, 54) mit dem Antrieb (A) vorgesehen ist.

2. Bausatz nach Anspruch 1, **dadurch gekennzeichnet, dass** jede Halterung (13, 14) aus einer mit einer Gabelscheide (3, 4) verbindbaren Gabelhalterung (15, 16) und einer damit lösbar verbundenen Wellenhalterung (17, 18) gebildet ist.

3. Bausatz nach Anspruch 2, **dadurch gekennzeichnet, dass** die Gabelhalterung (15, 16) mit der Wellenhalterung (17, 18) über Schrauben verbunden ist.

4. Bausatz nach einem der Ansprüche 1 bis 3, **dadurch gekennzeichnet, dass** die Elemente zur Verbindung der Halterung (13, 14) bzw. Gabelhalterung (15, 16) mit der Gabelscheide (3, 4) durch zumindest eine Schraubverbindung (21, 22, 23, 24) gebildet sind.

5. Bausatz nach Anspruch 4, **dadurch gekennzeichnet, dass** ein Element zur Verbindung der Halterung (13, 14) bzw. Gabelhalterung (15, 16) mit der Gabelscheide (3, 4) durch eine U-förmige Gabelschelle (27, 28) mit Gewinden (31, 32) an den Enden zur lösbaren Verbindung mit Muttern gebildet ist, und dass an der Halterung (13, 14) bzw. Gabelhalterung (15, 16) ein Langloch (33, 34) angeordnet ist, über welches die, die Gabelscheide (3, 4) umfassende Gabelschelle (27, 28) befestigbar ist.

6. Bausatz nach einem der Ansprüche 1 bis 5, **dadurch gekennzeichnet, dass** die Lager (35, 36) durch Kugellager gebildet sind.

7. Bausatz nach einem der Ansprüche 1 bis 6, **dadurch gekennzeichnet, dass** an einer Halterung (13, 14) ein Element (48) zur lösbaren Befestigung des Antriebs (A) angeordnet ist.

8. Bausatz nach einem der Ansprüche 1 bis 7, **dadurch gekennzeichnet, dass** an einer Halterung (13, 14) ein Element (50) zur lösbaren Befestigung einer Batterie (B) für einen elektrisch ausgebildeten Antrieb (A) angeordnet ist.

9. Bausatz nach Anspruch 7 oder 8, **dadurch gekennzeichnet, dass** das Befestigungselement (48, 50) durch eine Flügelschraube oder dgl. gebildet ist.

10. Bausatz nach einem der Ansprüche 1 bis 9, **dadurch gekennzeichnet, dass** eine vom Lager (35) einer Halterung (13) zum Lager (36) der zweiten Halterung (14) durchgehende Welle (37) vorgesehen ist.

11. Bausatz nach Anspruch 10, **dadurch gekennzeichnet, dass** die Welle (37) im mittleren Bereich (38) einen mehreckigen, insbesondere quadratischen Querschnitt aufweist, wobei der Außendurchmesser der Welle (37) im mittleren Bereich (38) geringfügig größer ist als der Innendurchmesser der Radnabe (9) des anzutreibenden Rades (8), und dass die drehfeste Verbindung zwischen Welle (37) und Rad (8) durch eine Presspassung der Welle (37) in der Radnabe (9) gebildet ist.

12. Bausatz nach Anspruch 11, **dadurch gekennzeichnet, dass** zwei Fixierscheiben (41, 42) mit einer Aufnahme (43, 44) für die Welle (37) entsprechend dem mehreckigen Querschnitt vorgesehen sind, und dass die Fixierscheiben (41, 42) an der, der Radnabe (9) zugewandten Seite eine Bezahnung (45, 46) oder dgl. zur drehfesten Verbindung mit der Radnabe (9) aufweisen.

13. Bausatz nach einem der Ansprüche 1 bis 9, **dadurch gekennzeichnet, dass** zwei Wellen (53, 54) und zwei mit den Wellen (53, 54) verbindbare Fixierscheiben (41, 42) vorgesehen sind, und die Fixierscheiben (41, 42) an der dem Rad (8) zugewandeten Seite Elemente zur drehfesten Verbindung mit dem Rad (8) aufweisen.

14. Bausatz nach Anspruch 13, **dadurch gekennzeichnet, dass** die Elemente zur drehfesten Verbindung der Wellen (53, 54) mit dem Rad (8) durch mehrere, zwischen allfällige Speichen (10) des Rades (8) anordenbare Elemente, insbesondere Stäbe (51, 52) gebildet sind.

15. Bausatz nach einem der Ansprüche 1 bis 14, **dadurch gekennzeichnet, dass** die Einrichtung zur Verbindung zumindest einer Welle (37, 53, 54) mit dem Antrieb (A) durch einen Antriebsflansch (40) gebildet ist.

16. Fahrrad mit zumindest einem unangetriebenen Rad (8) und zumindest einem Antrieb (A), **dadurch gekennzeichnet, dass** das zumindest eine unangetriebene Rad (8) mit Hilfe des Bausatzes gemäß einem der Ansprüche 1 bis 15 mit dem Antrieb (A) verbunden ist.

17. Fahrrad nach Anspruch 16, **dadurch gekennzeichnet, dass** das vordere Rad (8) mit dem Antrieb (A) verbunden ist.

18. Fahrrad nach Anspruch 16 oder 17, **dadurch gekennzeichnet, dass** der Antrieb (A) durch einen Elektromotor und eine entsprechende Batterie (B) gebildet ist.

19. Fahrrad nach Anspruch 16 oder 17, **dadurch gekennzeichnet, dass** der Antrieb (A) durch einen Verbrennungsmotor mit einer entsprechenden Treibstoffzufuhr gebildet ist.

20. Verfahren zum Umrüsten eines unangetriebenen Rades (8) eines Fahrrades in ein mittels einem Antrieb (A) angetriebenes Rad (8), wobei das Rad (8) eine Radnabe (9) zur drehbaren Aufnahme einer, zwischen den Gabelscheiden (3, 4) einer Gabel (1) befestigbaren Achse (5) aufweist, **dadurch gekennzeichnet, dass**
- das unangetriebene Rad (8) aus der Gabel (1) ausgebaut wird,
- zwei Halterungen (13, 14) mit jeweils einem Lager (35, 36) an jeweils einer Gabelscheide (3, 4) der Gabel (1) befestigt werden,
- eine drehfeste Verbindung zwischen zumindest einer Welle (37, 53, 54) und dem Rad (8) hergestellt wird,
- die mit dem Rad (8) verbundene zumindest eine Welle (37, 53, 54) zwischen den Lagern (35, 36) der Halterungen (13, 14) angeordnet wird, und
- zumindest eine Welle (37, 53, 54) mit dem Antrieb (A) verbunden wird.

21. Verfahren nach Anspruch 20, **dadurch gekennzeichnet, dass** die Achse (5) aus der Radnabe (9) des unangetriebenen Rades (8) entfernt wird, und eine Welle (37) mit einem geringfügig größeren Außendurchmesser als der Innendurchmesser der Radnabe (9) zur Herstellung einer drehfesten Verbindung zwischen Welle (37) und Rad (8) in die Radnabe (9) gepresst wird.

22. Verfahren nach Anspruch 20, **dadurch gekennzeichnet, dass** die Achse (5) aus der Radnabe (9) des unangetriebenen Rades (8) entfernt wird, und zwei, mit zumindest einer Welle (37, 53, 54) verbundene Fixierscheiben (41, 42) drehfest mit der Radnabe (9) des Rades (8) verbunden werden.

## Claims

1. Kit for converting a non-driven wheel (8) of a bicycle into a wheel (8) driven by a drive (A), the wheel (8) having a hub (9) for rotatably receiving an axle (5), the axle (5) being mountable between the fork blades (3, 4) of a fork (1), **characterized in that** two supports (13, 14) arrangeable at the outer face of a fork blade (3, 4) and having elements for connection with a fork blade (3, 4), respectively, are provided and the supports (13, 14) each comprise a bearing (35, 36) for rotatably seating at least one shaft (37, 53, 54), the at least one shaft (37, 53, 54) being connectable in co-rotation with the wheel (8) to be driven, and **in that** a device for coupling at least one shaft (37, 53, 54) to the drive (A) is provided.

2. Kit according to claim 1, **characterized in that** each support (13, 14) comprises a fork support (15, 16) being connectable with a fork blade (3, 4), and a shaft support (17, 18) for being detachably coupled to the fork support.

3. Kit according to claim 2, **characterized in that** the fork support (15, 16) is coupled to the shaft support (17, 18) by means of screws.

4. Kit according to any of claims 1 to 3, **characterized in that** the elements for coupling the support (13, 14) or fork support (15, 16) to the fork blades (3, 4) are realised by at least one screw coupling (21, 22, 23, 24).

5. Kit according to claim 4, **characterized in that** an element for coupling the support (13, 14) or fork support (15, 16) to the fork blades (3, 4) is realised by means of a U-shaped fork clamp (27, 28) having threaded ends (31, 32) for being detachably coupled with nuts, and **in that** an elongated hole (33, 34) is located on the support (13, 14) or fork support (15, 16), by means of which the fork clamp (27, 28) surrounding the fork blade (3, 4) can be fixed.

6. Kit according to any of claims 1 to 5, **characterized in that** the bearings (35, 36) are ball bearings.

7. Kit according to any of claims 1 to 6, **characterized in that** an element (48) for detachably mounting drive (A) is located on a support (13, 14).

8. Kit according to any of claims 1 to 7, **characterized in that** an element (50) for detachably mounting a battery (B) for an electric drive (A) is located on a support (13, 14).

9. Kit according to claim 7 or 8, **characterized in that** the fixing element (48, 50) consists of a wing bolt or the like.

10. Kit according to any of claims 1 to 9, **characterized in that** a continuous shaft (37) extending from bearing (35) of one support (13) to bearing (36) of second support (14) is provided.

11. Kit according to claim 10, **characterized in that** said shaft (37) has in its centre portion (38) a polygonal, especially square, cross section, the outer diameter of the shaft (37) in the centre portion (38) being slightly larger than the inner diameter of the hub (9) of the wheel (8) to be driven, and **in that** the connection of shaft (37) and wheel (8) in co-rotation is realised by means of an interference fit of the shaft (37) in the hub (9).

12. Kit according to claim 11, **characterized in that** two locating discs (41, 42) are provided, having a seat (43, 44) for the shaft (37) corresponding to the polygonal cross section, and **in that** the locating discs (41, 42) comprise teeth (45, 46) or the like on the side thereof facing the hub (9) for being connected in co-rotation with the hub (9).

13. Kit according to any of claims 1 to 9, **characterized in that** two shafts (53, 54) and two locating discs (41, 42) connectable to the shafts (53, 54) are provided, the locating discs (41, 42) having elements for connection in co-rotation with wheel (8) on the side thereof facing the wheel (8).

14. Kit according to claim 13, **characterized in that** the elements for connecting the shafts (53, 54) in co-rotation with wheel (8) consist of a plurality of elements, especially rods (51, 52), to be arranged between possible spokes (10) of wheel (8).

15. Kit according to any of claims 1 to 14, **characterized in that** the arrangement for coupling the at least one shaft (37, 53, 54) to drive (A) consists of a driving flange (40).

16. Bicycle having at least one non-driven wheel (8) and at least one drive (A), **characterized in that** the at least one non-driven wheel is coupled to the drive (A) by means of the kit according to claim 1 to 15.

17. Bicycle according to claim 16, **characterized in that** the front wheel (8) is coupled with drive (A).

18. Bicycle according to claim 16 or 17, **characterized in that** drive (A) comprises an electric motor and a corresponding battery (B).

19. Bicycle according to claim 16 or 17, **characterized in that** drive (A) comprises a combustion engine and an appropriate fuel supply.

20. Method for converting a non-driven wheel (8) of a bicycle into a wheel (8) driven by a drive (A), the wheel (8) having a hub (9) for rotatably receiving an axle (5), the axle being mountable between the fork blades (3, 4) of a fork (1), **characterized in that**
- the non-driven wheel (8) is removed from the fork (1),
- two supports (13, 14) each comprising a bearing (35, 36) are mounted to a fork blade (3, 4) of the fork (1), respectively,
- at least one shaft (37, 53, 54) is connected with wheel (8) in co-rotation,
- the at least one shaft (37, 53, 54) being coupled to the wheel (8) is located between the bearings (35, 36) of the supports (13, 14), and
- at least one shaft (37, 53, 54) is coupled to drive (A).

21. Method according to claim 20, **characterized in that** the axle (5) is removed from the hub (9) of the non-driven wheel (8), and a shaft (37) having an outer diameter slightly larger than the inner diameter of the hub (9) is pressed into the hub (9) for realising a connection of the shaft (37) and the wheel (8) in co-rotation.

22. Method according to claim 20, **characterized in that** the axle (5) is removed from the hub (9) of the non-driven wheel (8), and two locating discs (41, 42) coupled to at least one shaft (37, 53, 54) are connected to the hub (9) of the wheel (8) in co-rotation.

## Revendications

1. Kit permettant de transformer une roue non motrice (8) d'une bicyclette en une roue (8) motrice au moyen d'un entraînement (A), ladite roue (8) comportant un moyeu de roue (9) pour le logement d'un axe rotatif (5) fixable entre les branches (3, 4) d'une fourche (1), **caractérisé en ce que** deux supports (13, 14) pouvant être disposés chacun sur la face extérieure d'une branche de fourche (3, 4) sont prévus avec des éléments d'assemblage à ladite branche de fourche (3, 4), et **en ce que** les supports (13, 14) présentent chacun un palier (35, 36) pour le montage en rotation d'au moins un arbre (37, 53, 54), le au moins un arbre (37, 53, 54) pouvant être raccordé solidaire en rotation à la roue à rendre motrice (8), et **en ce qu'**il est en outre prévu un dispositif pour raccorder le ou les arbres (37, 53, 54) à l'entraînement (A).

2. Kit selon la revendication 1, **caractérisé en ce que** chaque support (13, 14) est formé d'un support de fourche (15, 16) pouvant être raccordé à une branche de fourche (3, 4) et d'un support d'arbre (17, 18) raccordé de manière amovible à celui-ci.

3. Kit selon la revendication 2, **caractérisé en ce que** le support de fourche (15, 16) est raccordé au support d'arbre (17, 18) par des vis.

4. Kit selon l'une des revendications 1 à 3, **caractérisé en ce que** les éléments d'assemblage du support (13, 14) ou du support de fourche (15, 16) à la branche de fourche (3, 4) sont formés par au moins une fixation à vis (21, 22, 23, 24).

5. Kit selon la revendication 4, **caractérisé en ce qu'**un élément d'assemblage du support (13, 14) ou du support de fourche (15, 16) à la branche de fourche (3, 4) est formé par un collier de fourche (27, 28) en forme de U avec des filetages (31, 32) aux extrémités pour un raccord amovible au moyen d'écrous, et **en ce qu'**un trou allongé (33, 34) est ménagé sur le support (13, 14) ou le support de fourche (15, 16), au moyen duquel l'attache de fourche (27, 28) enserrant la branche de fourche (3, 4) peut être fixée.

6. Kit selon l'une des revendications 1 à 5, **caractérisé en ce que** les paliers (35, 36) sont formés par des roulements à billes.

7. Kit selon l'une des revendications 1 à 6, **caractérisé en ce qu'**un élément (48) de fixation amovible de l'entraînement (A) est disposé sur un support (13, 14).

8. Kit selon l'une des revendications 1 à 7, **caractérisé en ce qu'**un élément (50) de fixation amovible d'une batterie (B) pour un entraînement (A) réalisé électriquement est disposé sur un support (13, 14).

9. Kit selon la revendication 7 ou 8, **caractérisé en ce que** l'élément de fixation (48, 50) est formé par une vis papillon ou similaire.

10. Kit selon l'une des revendications 1 à 9, **caractérisé en ce qu'**il est prévu un arbre (37) allant du palier (35) d'un support (13) au palier (36) du deuxième support (14).

11. Kit selon la revendication 10, **caractérisé en ce que** l'arbre (37) présente dans sa partie centrale (38) une section polygonale, notamment carrée, le diamètre extérieur de l'arbre (37) étant dans la partie centrale (38) légèrement supérieur au diamètre intérieur du moyeu de roue (9) de la roue à rendre motrice (8), et **en ce que** le raccord solidaire en rotation entre l'arbre (37) et la roue (8) est formé par un ajustage serré de l'arbre (37) dans le moyeu de roue (9).

12. Kit selon la revendication 11, **caractérisé en ce que** deux disques de fixation (41, 42) sont prévus avec un logement (43, 44) pour l'arbre (37) correspondant à la section polygonale, et **en ce que** les disques de fixation (41, 42) présentent une denture (45, 46) ou similaire sur la face opposée au moyeu de roue (9), pour le raccord solidaire en rotation avec le moyeu de roue (9).

13. Kit selon l'une des revendications 1 à 9, **caractérisé en ce que** deux arbres (53, 54) et deux disques de fixation (41, 42) pouvant être raccordés aux arbres (53, 54) sont prévus, et **en ce que** les disques de fixation (41, 42) présentent sur la face opposée à la roue (8) des éléments de raccord solidaire en rotation avec la roue (8).

14. Kit selon la revendication 13, **caractérisé en ce que** les éléments de raccord solidaire en rotation des arbres (53, 54) à la roue (8) sont formés de plusieurs éléments pouvant être disposés entre d'éventuels rayons (10) de la roue (8), notamment des barres (51, 52).

15. Kit selon l'une des revendications 1 à 14, **caractérisé en ce que** le dispositif pour raccorder au moins un arbre (37, 53, 54) à l'entraînement (A) est formé par une bride d'entraînement (40).

16. Bicyclette comportant au moins une roue non motrice (8) et au moins un entraînement (A), **caractérisée en ce qu'**au moins une roue non motrice (8) est reliée à l'entraînement (A) au moyen du kit d'une des revendications 1 à 15.

17. Bicyclette selon la revendication 16, **caractérisée en ce que** la roue avant (8) est reliée à l'entraînement (A).

18. Bicyclette selon la revendication 16 ou 17, **caractérisée en ce que** l'entraînement (A) est formé par un moteur électrique et une batterie (B) correspondante.

19. Bicyclette selon la revendication 16 ou 17, **caractérisée en ce que** l'entraînement (A) est formé par un moteur à combustion avec une alimentation en carburant correspondante.

20. Procédé de transformation d'une roue non motrice (8) d'une bicyclette en une roue (8) rendue motrice au moyen d'un entraînement (A), ladite roue (8) comportant un moyeu de roue (9) pour le logement d'un axe rotatif (5) fixable entre les branches (3, 4) d'une fourche (1), **caractérisé en ce que**
- la roue non motrice (8) est démontée de la fourche (1),
- deux supports (13, 14) pourvus chacun d'un palier (35, 36) sont fixés chacun sur une branche (3, 4) de la fourche (1),
- un raccord solidaire en rotation est réalisé entre au moins un arbre (37, 53, 54) et la roue (8),
- le au moins un arbre (37, 53, 54) raccordé à la roue (8) est disposé entre les paliers (35, 36) des supports (13, 14), et
- au moins un arbre (37, 53, 54) est relié à l'entraînement (A).

21. Procédé selon la revendication 20, **caractérisé en ce que** l'axe (5) est retiré du moyeu de roue (9) de la roue non motrice (8), et un arbre (37) ayant un diamètre extérieur légèrement supérieur au diamètre intérieur du moyeu de roue (9) est ajusté serré dans le moyeu de roue (9) pour réaliser un raccord solidaire en rotation entre l'arbre (37) et la roue (8).

22. Procédé selon la revendication 20, **caractérisé en ce que** l'axe (5) est retiré du moyeu de roue (9) de la roue non motrice (8), et deux disques de fixation (41, 42) raccordés à au moins un arbre (37, 53, 54) sont raccordés solidaires en rotation au moyeu (9) de la roue (8).
